# EUROPÄISCHE PATENTSCHRIFT

(11) **EP 3 449 143 B1**
(45) Veröffentlichungstag und Bekanntmachung des Hinweises auf die Patenterteilung: **10.06.2020**
(21) Anmeldenummer: 17717683.1
(22) Anmeldetag: 12.04.2017
(51) Int. Cl.: F16D 3/72, F04C 2/107

(54) **FEDERSTEGKUPPLUNG UND ROTOR FÜR EINE DOSIERPUMPE EINES HAUSGERÄTS**
FLEXIBLE COUPLING AND ROTOR FOR A METERING PUMP OF A DOMESTIC APPLIANCE
ACCOUPLEMENT À BARRETTES RESSORT ET ROTOR POUR UNE POMPE DE DOSAGE D'UN APPAREIL ÉLECTROMÉNAGER

(30) Priorität: 28.04.2016 DE 102016207245
(43) Veröffentlichungstag der Anmeldung: 06.03.2019
(73) Patentinhaber: BSH Hausgeräte GmbH, 81739 München (DE)
(72) Erfinder: EGLMEIER, Hans, 10587 Berlin (DE); MEITZNER, Moritz, 13467 Berlin (DE)
(86) Internationale Anmeldenummer: PCT/EP2017/058795
(87) Internationale Veröffentlichungsnummer: WO 2017/186494

(56) Entgegenhaltungen:
- WO-A1-2014/111082
- DE-A1- 2 011 400
- DE-A1- 4 215 725
- DE-B3- 10 335 966
- GB-A- 489 018
- GB-A- 2 120 729

## Beschreibung

Die vorliegende Erfindung betrifft eine Federstegkupplung, insbesondere eine Federstegkupplung für eine Exzenterschneckenpumpe eines Dosiersystems eines Hausgeräts, beispielsweise einer Waschmaschine. Ferner betrifft die Erfindung einen Rotor einer Exzenterschneckenpumpe mit einer solchen Federstegkupplung sowie ein Hausgerät, insbesondere eine Waschmaschine, mit einer solchen Exzenterschneckenpumpe.

Die Offenlegungsschrift GB 489 018 A beschreibt eine universelle Verbindungsvorrichtung.

Die Offenlegungsschrift GB 2 120 729 A beschreibt eine Schraubenradpumpe.

Bei Hausgeräten, insbesondere Waschmaschinen, sind einfach aufgebaute und kostengünstige Dosierpumpen für Fluide, insbesondere für flüssiges Waschmittel, von Interesse, um als Dosiersystem in den Hausgeräten eingesetzt zu werden. Bekannt sind hierbei Dosiersysteme in unterschiedlichen Varianten, wie beispielsweise Volumenpumpen (Zahnradpumpen, Schlauchpumpen, oder Kolbenpumpen). Ebenfalls bekannt sind sogenannte Exzenterschneckenpumpen, welche für viele Einsatzzwecke gebräuchlich sind. Darüber hinaus sind sogenannte archimedische Schrauben bekannt, welche nur ein einziges bewegtes Teil in Schneckenform aufweisen, bei denen es sich jedoch um keine Volumenmaschinen handelt, so dass diese für Hausgeräte, insbesondere Waschmaschinen, kaum brauchbar sind. Ferner sind Schneckenpumpen mit mehreren ineinandergreifenden Schnecken bekannt, die insbesondere mit zwei oder aber auch mit vier Schnecken ineinandergreifend ausgebildet sind.

Im Fall einer Exzenterschneckenpumpe ist eine Ausgleichskupplung mit Achsversatz zum Übertragen der Drehbewegung eines Antriebs in den Rotor der Exzenterschneckenpumpe unter Ausgleich der umlaufenden Achse des Rotors erforderlich. Zur Verbindung von Wellen mit derartigen Fluchtungsfehlern, d.h. paralleler Achsversatz und Winkelversatz, sind Ausgleichskupplungen bekannt, beispielsweise Oldhamkupplungen, Federstegkupplungen, Kardanwellen, Bogenzahnwellen und dergleichen. Eine Ausgleichskupplung in Form einer Federstegkupplung wird beispielsweise in der EP 0 372 306 A1 offenbart (dort als Federscheibenkupplung bezeichnet). Die dort beschriebene Federstegkupplung besteht aus einem zylindrischen Grundkörper, beispielsweise aus Stahl oder Aluminium, in dem eine axiale Längsbohrung ausgebildet ist. Eine Vielzahl von Federscheiben ist durch eine Vielzahl von Einfräsungen quer zur Längsachse des zylindrischen Grundkörpers definiert.

Nachteilig bei dem bekannten Stand der Technik, beispielsweise bei der in der EP 0 372 306 A1 beschriebenen Federstegkupplung ist, dass derartige Federstegkupplungen verhältnismäßig komplex und kostenintensiv hergestellt werden müssen. Insbesondere für die Verwendung einer Federstegkupplung in einer Dosierpumpe eines Hausgeräts, beispielsweise einer Waschmaschine, wäre es wünschenswert eine Federstegkupplung zu haben, die sich einfach und kostengünstig beispielsweise mittels Kunststoffspritzguss herstellen lässt.

Der vorliegenden Erfindung liegt somit die Aufgabe zugrunde eine einfach aufgebaute und kostengünstige Federstegkupplung vorzuschlagen, welche kostengünstig hergestellt werden kann und insbesondere für einen Einsatz in einer Dosierpumpe eines Hausgeräts geeignet ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe mittels einer Federstegkupplung gelöst, welche eine Hohlzylinderform aufweist und eine Längsachse definiert, wobei die Federstegkupplung eine Vielzahl von Federstegkupplungselementen umfasst, wobei jedes Federstegkupplungselement einen ersten ringförmigen Federsteg und einen zweiten ringförmigen Federsteg umfasst, die entlang der Längsachse der Federstegkupplung parallel versetzt zueinander angeordnet sind, wobei der erste ringförmige Federsteg und der zweite ringförmige Federsteg jeweils einen ersten halbringförmigen Federstegabschnitt und einen zweiten halbringförmigen Federstegabschnitt umfassen, die jeweils entlang der Längsachse der Federstegkupplung axial versetzt zueinander angeordnet sind.

Dadurch wird beispielsweise der technische Vorteil erreicht, dass die Federstegkupplung zweiteilig entformbar ist und somit besonders einfach und mit geringen Herstellungskosten aus Kunststoff gefertigt werden kann, beispielsweise mittels Kunststoffspritzguss mit einem zweiteiligen Werkzeug.

Gemäß einer bevorzugten Ausführungsform der Erfindung weisen der erste ringförmige Federsteg und der zweite ringförmige Federsteg einen im Wesentlichen rechteckigen Querschnitt auf.

Gemäß einer weiteren bevorzugten Ausführungsform der Erfindung ist der erste halbringförmige Federstegabschnitt des ersten ringförmigen Federstegs jeweils über ein erstes axiales Verbindungselement mit dem ersten halbringförmigen Federstegabschnitt des zweiten ringförmigen Federstegs des Federstegkupplungselements stoffschlüssig verbunden.

Gemäß einer weiteren bevorzugten Ausführungsform der Erfindung ist der zweite halbringförmige Federstegabschnitt des ersten ringförmigen Federstegs über ein zweites axiales Verbindungselement mit dem zweiten halbringförmigen Federstegabschnitt des zweiten ringförmigen Federstegs des Federstegkupplungselements stoffschlüssig verbunden, wobei das zweite axiale Verbindungselement relativ zu der Längsachse der Federstegkupplung jeweils gegenüber dem ersten axialen Verbindungselement ausgebildet ist.

Gemäß einer weiteren bevorzugten Ausführungsform ist jeweils das erste axiale Verbindungselement über einen radial verlaufenden Mittelsteg stoffschlüssig mit dem zweiten axialen Verbindungselement verbunden.

Gemäß einer weiteren bevorzugten Ausführungsform ist jeweils der axiale Abstand zwischen dem ersten oder zweiten halbringförmigen Federstegabschnitt des ersten ringförmigen Federstegs und dem ersten oder zweiten halbringförmigen Federstegabschnitt des zweiten ringförmigen Federstegs des jeweiligen Federstegkupplungselements größer als der axiale Abstand zwischen dem ersten halbringförmigen Federstegabschnitt und dem zweiten halbringförmigen Federstegabschnitt des ersten oder zweiten ringförmigen Federstegs.

Gemäß einer weiteren bevorzugten Ausführungsform sind zwei benachbarte Federstegkupplungselemente über zwei dritte axiale Verbindungselemente stoffschlüssig miteinander verbunden, wobei die zwei dritten axialen Verbindungselemente an zwei gegenüberliegenden Stellen des Umfangs der hohlzylinderförmigen Federstegkupplung ausgebildet sind.

Gemäß einer weiteren bevorzugten Ausführungsform sind die zwei dritten axialen Verbindungselemente an zwei Stellen des Umfangs der hohlzylinderförmigen Federstegkupplung ausgebildet, die mit den Stellen des Umfangs der hohlzylinderförmigen Federstegkupplung, an denen jeweils die ersten axialen Verbindungselemente ausgebildet sind, einen rechten Winkel definieren.

Gemäß einer weiteren bevorzugten Ausführungsform weisen die zwei dritten axialen Verbindungselemente eine radiale Breite auf, die gleich der radialen Breite des ersten und des zweiten ringförmigen Federstegs ist.

Gemäß einer weiteren bevorzugten Ausführungsform ist die Federstegkupplung ein Spritzgussteil.

Gemäß einem zweiten Aspekt betrifft die Erfindung einen Rotor für eine Exzenterschneckenpumpe, wobei der Rotor eine Federstegkupplung gemäß dem ersten Aspekt der Erfindung umfasst, wobei die Federstegkupplung ein Antriebsrad des Rotors an eine Exzenterschnecke des Rotors koppelt.

Gemäß einer bevorzugten Ausführungsform sind die Federstegkupplung, das Antriebsrad und die Exzenterschnecke einstückig ausgebildet.

Gemäß einer bevorzugten Ausführungsform sind die Federstegkupplung und das Antriebsrad aus unterschiedlichen Materialien gefertigt, und/oder sind die Federstegkupplung und die Exzenterschnecke aus unterschiedlichen Materialien gefertigt.

Gemäß einem dritten Aspekt betrifft die Erfindung eine Exzenterschneckenpumpe mit einem Rotor gemäß dem zweiten Aspekt der Erfindung.

Gemäß einem vierten Aspekt betrifft die Erfindung ein Hausgerät, insbesondere eine Waschmaschine, mit einer Exzenterschneckenpumpe gemäß dem dritten Aspekt der Erfindung zum Dosieren eines Fluids.

Es zeigen:
- Fig. 1: eine schematische Darstellung zur Veranschaulichung der Bewegung eines Rotors bei einer Exzenterschneckenpumpe,
- Fig. 2: eine perspektivische Ansicht einer Federstegkupplung gemäß einer Ausführungsform als Teil eines Rotors einer Exzenterschneckenpumpe,
- Fig. 3: eine weitere perspektivische Ansicht der Federstegkupplung gemäß der Ausführungsform von Figur 2 als Teil eines Rotors einer Exzenterschneckenpumpe,
- Fig. 4: eine perspektivische Detailansicht mehrerer Federstegkupplungselemente der Federstegkupplung gemäß der Ausführungsform von Figur 2,
- Fig. 5: eine perspektivische Detailansicht mehrerer Federstegkupplungselemente der Federstegkupplung gemäß der Ausführungsform von Figur 2,
- Fig. 6: eine perspektivische Detailansicht eines Federstegkupplungselements der Federstegkupplung gemäß der Ausführungsform von Figur 2,
- Fig. 7: eine perspektivische Detailansicht eines Federstegkupplungselements der Federstegkupplung gemäß der Ausführungsform von Figur 2,
- Fig. 8: eine Seitenquerschnittsansicht der Federstegkupplung gemäß der Ausführungsform von Figur 2 als Teil eines Rotors einer Exzenterschneckenpumpe entlang einer ersten Ebene, und
- Fig. 9: eine Seitenquerschnittsansicht der Federstegkupplung gemäß der Ausführungsform von Figur 2 als Teil eines Rotors einer Exzenterschneckenpumpe entlang einer zweiten Ebene, die senkrecht zu der ersten Ebene von Figur 5 steht.

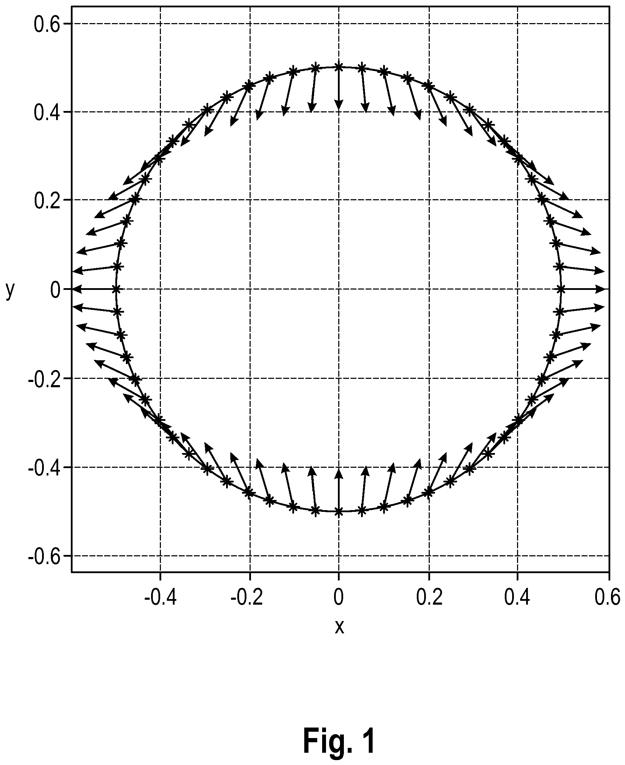

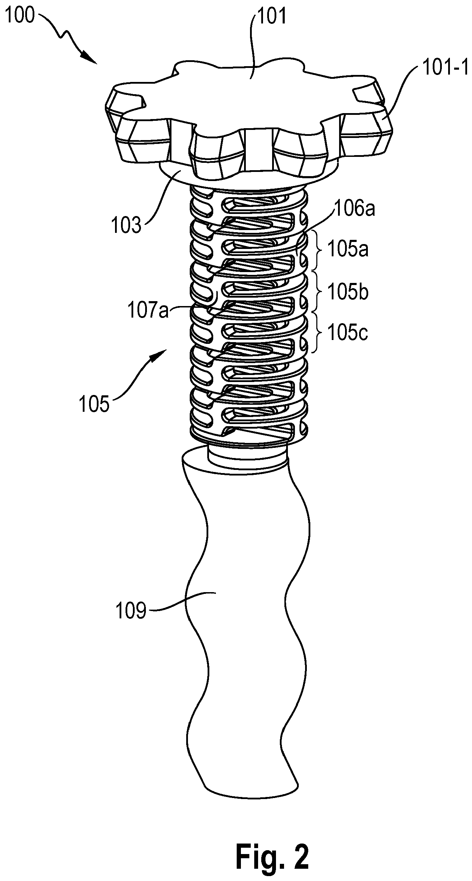

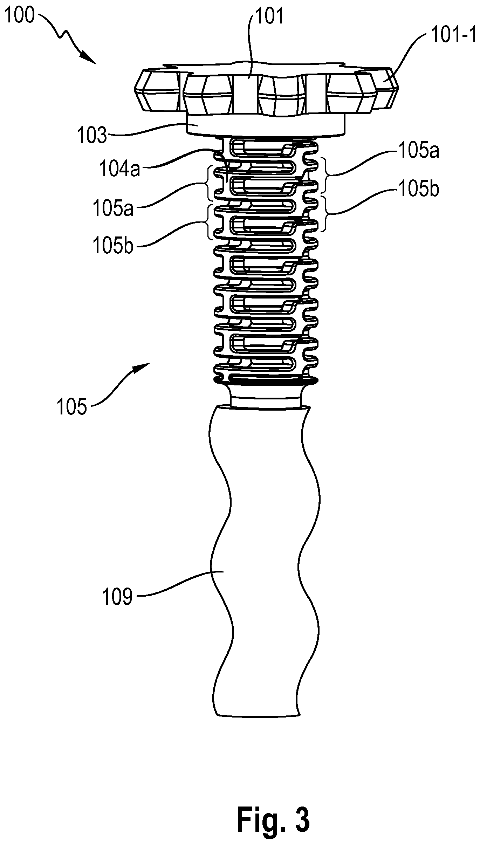

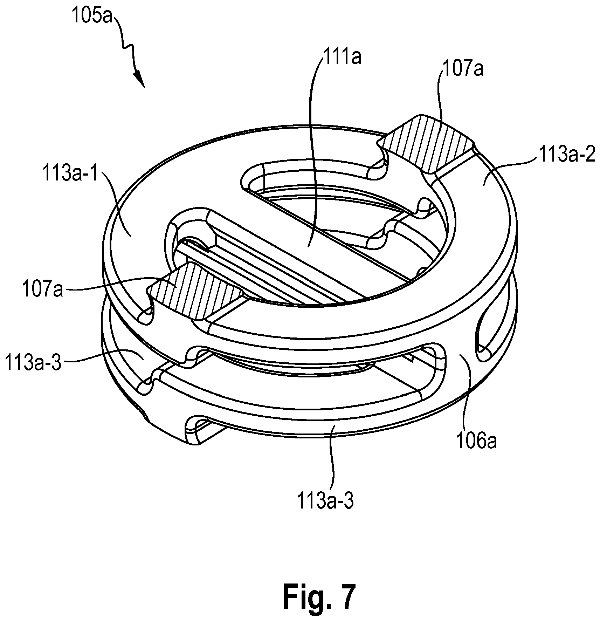

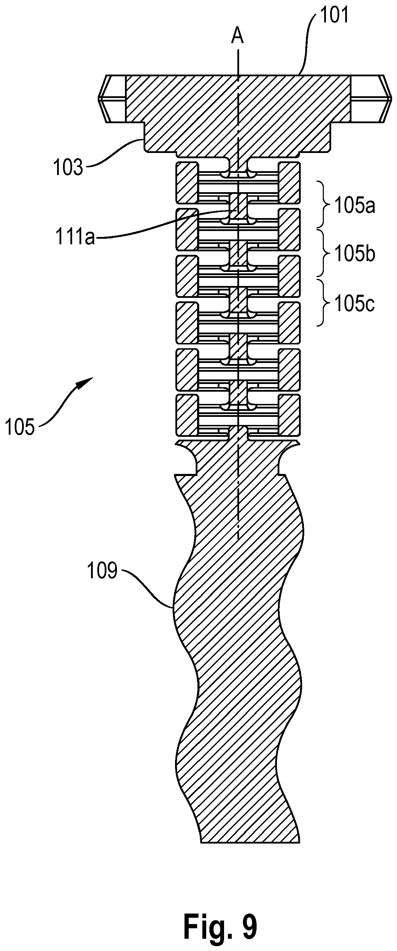

Figur 1 zeigt eine schematische Darstellung zur Veranschaulichung der Bewegung einer Exzenterschnecke 109, die zusammen mit einer erfindungsgemäßen Federstegkupplung 105 (hier auch als Federstegwelle 105 bezeichnet) Teil eines erfindungsgemäßen Rotors 100 einer Exzenterschneckenpumpe ist, wie nachstehend im Zusammenhang mit den Figuren 2 bis 9 beschrieben wird.

Gegenüber Rotationskolbenpumpen mit zwei bewegten Rotorteilen, wie sie beispielsweise in Zahnradpumpen oder -schrauben vorzufinden sind, bei welchen die Rotorteile ausschließlich Rotationsbewegungen um ihre eigene Achse ausführen und entsprechend einfach zu lagern und anzutreiben sind, führt die Exzenterschnecke 109 bei einer Exzenterschneckenpumpe zusätzlich zu ihrer eigenen Drehung um eine Symmetrieachse eine weitere, dieser Drehung überlagerte, Bewegung auf einem Zylindermantel aus. Die isolierte Rotationsbewegung ist in Figur 1 durch die Kreisbahn in der x-y-Ebene dargestellt. Die der Rotationsbewegung überlagerte Rollbewegung bewirkt eine resultierende Bewegung der Exzenterschnecke 109, welche in der Figur 1 durch die Vielzahl der einzelnen Pfeile an der Kreisbahn gekennzeichnet ist.

Die Figuren 2 bis 9 zeigen verschiedene Ansichten einer elastischen Federstegkupplung bzw. Federstegwelle 105 gemäß einer Ausführungsform, die Teil eines erfindungsgemäßen Rotors 100 für eine Exzenterschneckenpumpe ist.

Der Rotor 100 umfasst neben der im Wesentlichen hohlzylinderförmigen Federstegkupplung 105 ein Antriebsrad 101, ein Lager 103 und eine Exzenterschnecke 109. Das Antriebsrad 101, das zur Kopplung des Rotors 100 an einen Antriebsmotor dient, ist als Zahnrad 101 mit einer Vielzahl von Zähnen ausgebildet. In Figur 2 ist ein beispielhafter Zahn des Antriebsrads 101 als Zahn 101-1 gekennzeichnet. Das Lager 103 des Rotors 100, das gleichzeitig als Dichtung dienen kann, verbindet das Antriebsrad 101 mit der Federstegkupplung 105 und dient dazu, den Rotor 100 in einem entsprechenden Lager einer Exzenterschneckenpumpe drehbar zu lagern. Die Exzenterschnecke 109 des Rotors 100 ist ausgebildet, in einem entsprechend geformten Stator einer Exzenterschneckenpumpe aufgenommen zu werden, um relativ zu dem Stator rotieren zu können und dadurch beispielsweise ein Fluid zu fördern.

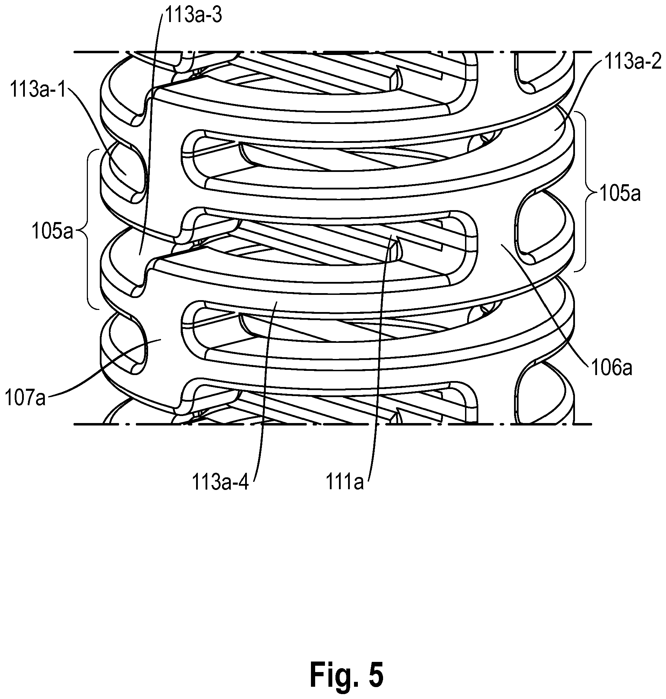

Bei der in den Figuren 2 bis 9 dargestellten Ausführungsform besteht die im Wesentlichen hohlzylinderförmige Federstegkupplung 105 aus einer Vielzahl von Federstegkupplungselementen, die im Wesentlichen identisch zueinander ausgebildet sind und entlang der Längsachse A (siehe insbesondere Figur 5) der Federstegkupplung 105 angeordnet sind. In der perspektivischen Darstellung von Figur 2 sind beispielhaft drei Federstegkupplungselemente 105a, 105b und 105c der Federstegkupplung 105 gekennzeichnet. Die nachstehend im Detail beschriebenen Federstegkupplungselemente stellen sozusagen die Elementarzellen der Federstegkupplung 105 dar.

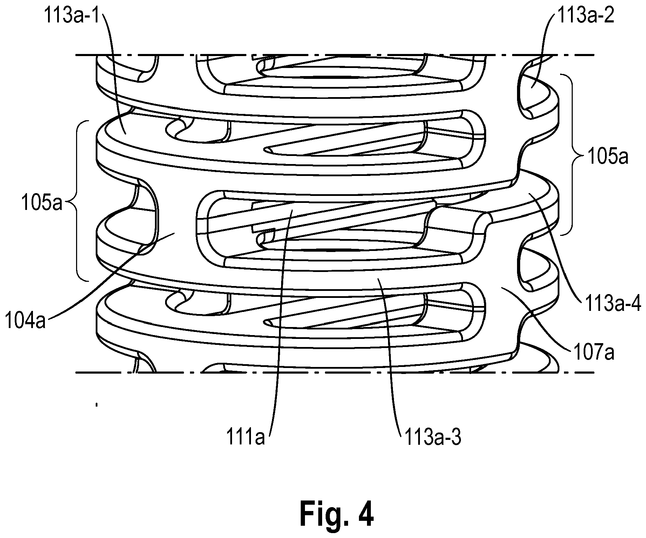

Die Figuren 4 bis 7 zeigen perspektivische Detailansichten von mehreren beispielhaften Federstegkupplungselementen, wobei nachstehend stellvertretend für die Vielzahl von Federstegkupplungselementen 105a-c das Federstegkupplungselement 105a im Detail beschrieben wird. Das Federstegkupplungselement 105a umfasst einen ersten (in den Figur 4 bis 7 oberen) ringförmigen Federsteg und einen zweiten (in den Figuren 4 bis 7 unteren) ringförmigen Federsteg, die sich jeweils in einer Ebene senkrecht zu der Längsachse A der Federstegkupplung 105 in Umfangsrichtung um die Längsachse A erstrecken. Dabei ist der obere ringförmige Federsteg entlang der Längsachse A der Federstegkupplung 105 parallel versetzt zu dem zweiten ringförmigen Federsteg ausgebildet.

Bei der in den Figuren 2 bis 9 dargestellten Ausführungsform, weisen sowohl der erste ringförmige Federsteg als auch der zweite ringförmige Federsteg einen im Wesentlichen rechteckigen Querschnitt auf. Anders geformte Querschnitte sind jedoch selbstverständlich ebenfalls möglich.

Der erste ringförmige Federsteg und der zweite ringförmige Federsteg des Federstegkupplungselements 105a umfassen jeweils einen ersten (in den Figuren 4 bis 7 unteren) halbringförmigen Federstegabschnitt 113a-1 und 113a-3 und einen zweiten (in den Figuren 4 bis 7 oberen) halbringförmigen Federstegabschnitt 113a-2 und 113a-4. Dabei ist der erste halbringförmige Federstegabschnitt 113a-1, 113a-3 jeweils relativ zu der Längsachse A der Federstegkupplung 105 axial versetzt zu dem zweiten halbringförmigen Federstegabschnitt 113a-2, 113a-4 angeordnet, und zwar mit einem axialen Versatz der kleiner als der parallele Versatz zwischen dem ersten ringförmigen Federsteg und dem zweiten ringförmigen Federsteg ist. Mit anderen Worten: der erste halbringförmige Federstegabschnitt 113a-1, 113a-3 und der zweite halbringförmige Federstegabschnitt 113a-2, 113a-4 definieren jeweils unterschiedliche Ebenen, die entlang der Längsachse A der Federstegkupplung 105 parallel versetzt zueinander liegen.

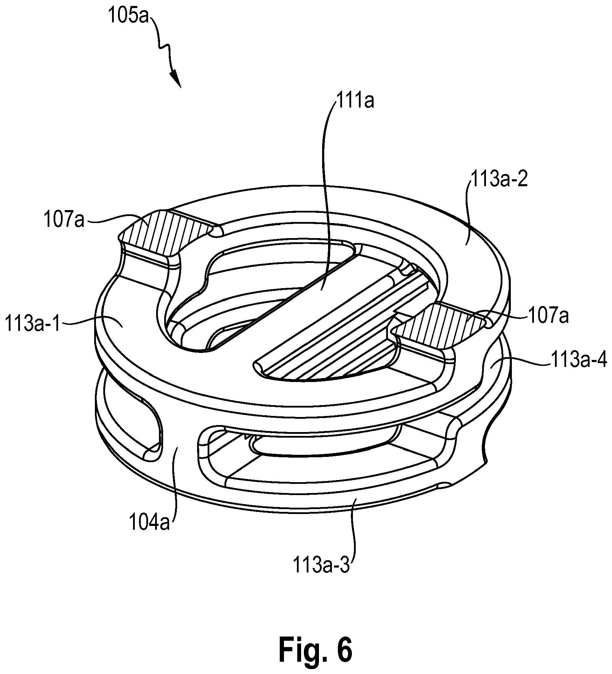

Wie sich insbesondere den Figuren 4 und 6 entnehmen lässt, ist der erste untere halbringförmige Federstegabschnitt 113a-1 des ersten oberen ringförmigen Federstegs über ein erstes axiales Verbindungselement 104a mit dem ersten unteren halbringförmigen Federstegabschnitt 113a-3 des zweiten unteren ringförmigen Federstegs des Federstegkupplungselements 105a stoffschlüssig verbunden. Ferner ist der zweite obere halbringförmige Federstegabschnitt 113a-2 des ersten oberen ringförmigen Federstegs über ein zweites axiales Verbindungselement 106a mit dem zweiten oberen halbringförmigen Federstegabschnitt 113a-4 des zweiten unteren ringförmigen Federstegs des Federstegkupplungselements 105a stoffschlüssig verbunden.

Bei der in den Figuren 2 bis 9 dargestellten Ausführungsform ist das zweite axiale Verbindungselement 106a relativ zu der Längsachse A der Federstegkupplung 105 jeweils gegenüber dem ersten axialen Verbindungselement 104a ausgebildet. Das erste axiale Verbindungselement 104a ist jeweils über einen radial verlaufenden Mittelsteg 111a stoffschlüssig mit dem zweiten axialen Verbindungselement 106a verbunden. Dieser Mittelsteg 111a dient beispielsweise dazu, dass bei einer Herstellung der Federstegwelle mittels eines Spritzgussverfahrens ein Hinterschnitt vermieden werden kann.

Wie sich insbesondere den Figuren 4 bis 7 entnehmen lässt, ist das Federstegkupplungselement 105a jeweils über zwei dritte axiale Verbindungselemente 107a (aufgrund der Darstellungsweise ist teilweise nur ein drittes axiales Verbindungselement 107a in den Figuren erkennbar) mit den darüber und darunter angeordneten Federstegkupplungselementen, beispielsweise dem Federstegkupplungselement 105b, stoffschlüssig verbunden.

Bei der in den Figuren 2 bis 9 dargestellten Ausführungsform sind die beiden dritten axialen Verbindungselemente 107a an zwei gegenüberliegenden Stellen des Umfangs der hohlzylinderförmigen Federstegkupplung 105 ausgebildet. Dabei können, wie in den Figuren dargestellt, die beiden dritten axialen Verbindungselemente 107a an zwei Stellen des Umfangs der hohlzylinderförmigen Federstegkupplung 105 ausgebildet sein, die mit den Stellen des Umfangs der hohlzylinderförmigen Federstegkupplung 105, an denen jeweils das erste axiale Verbindungselement 104a und/oder das zweite axiale Verbindungselement 106a ausgebildet sind, im Wesentlichen einen rechten Winkel definieren. Wie sich insbesondere den Figuren 4 bis 7 entnehmen lässt, können die beiden dritten axialen Verbindungselemente 107a eine radiale Breite aufweisen, die gleich der radialen Breite der ringförmigen Federstege ist.

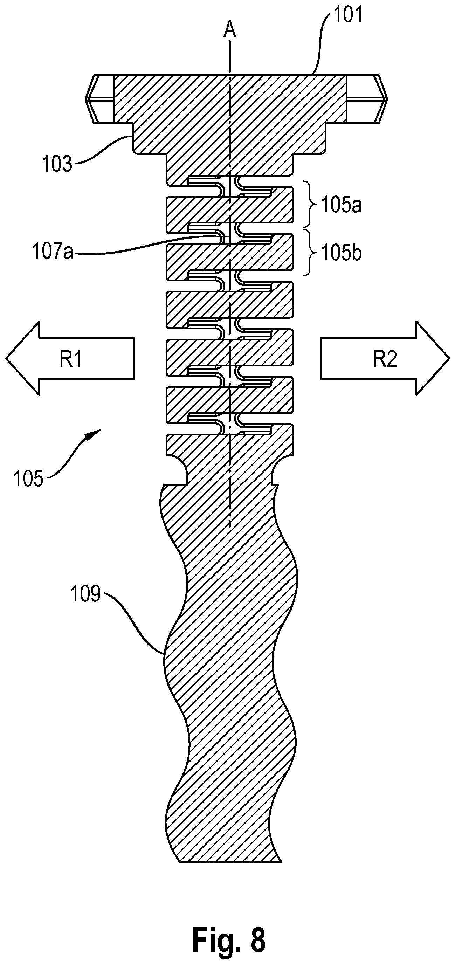

Vorteilhafterweise ist die erfindungsgemäße Federstegkupplung 105 insbesondere aufgrund der vorstehend beschriebenen treppenartigen Ausgestaltung mit dem stufenartigen Versatz der halbringförmigen Federstegabschnitte 113a-1, 113a-2, 113a-3, 113a-4 zweiteilig entformbar, und zwar in Richtung der zwei in Figur 8 gekennzeichneten Entformungsrichtungen R1 und R2. Ebenso lässt sich das Lager 103 in den Entformungsrichtungen R1 und R2 zweiteilig mitentformen. Ferner kann die Exzenterschnecke 109 zusammen mit der Federstegkupplung 105 zweiteilig entformt werden.

Durch die spezielle Gestaltung der Federstegkupplungselemente 105a-c der Federstegkupplung 105 ist es nicht nötig, die bei herkömmlichen Federstegwellen übliche axiale Bohrung auszubilden, was im Allgemeinen eine zusätzliche axiale Entformungsrichtung im Werkzeug bedeuten würde. Die erfindungsgemäße Federstegkupplung 105 hat dadurch auch keine axialen Öffnungen (auf keiner der beiden Stirnseiten), was für die bevorzugte Verwendung als fluidführendes Bauteil in einer Exzenterschneckenpumpe notwendig ist. Dadurch kann der fluidführende Bereich um die Federstegkupplung 105 vorteilhafterweise ohne weitere Maßnahmen vom einem außenliegenden Antrieb getrennt werden. Bei einer axialen Bohrung wäre ein zusätzliches Bauteil notwendig, um die sich bei Herstellung mit einem axialen Schieber ergebende Öffnung fluiddicht zu verschließen.

Bei erfindungsgemäßen Ausführungsformen des Rotors 100 kann der gesamte Rotor 100 als Baugruppe aus mehreren Teilen bestehen, die zusammen montiert werden. Die Teile lassen sich dann aus einem jeweils besonders geeigneten Werkstoff fertigen. Beispielsweise kann die hohlzylinderförmige Federstegkupplung 105 aus einem sehr elastischen Werkstoff gefertigt werden, während das Antriebsrad 101 und/oder die Exzenterschnecke 109 aus einem starren Werkstoff gefertigt werden. Bei der bevorzugten Anwendung der Federstegkupplung 105 in einer Exzenterschneckenpumpe ist insbesondere eine Auswahl der Werkstoffe nach den mit den Bauteilen in Kontakt kommenden Fördermedien von Bedeutung. In einem Dosiersystem einer Waschmaschine könnte beispielsweise Bleiche zum Einsatz kommen, die durch Kontakt mit der Exzenterschnecke 109 und der Federstegkupplung 105 besondere Anforderungen an den Werkstoff dieser Funktionseinheiten stellt, während der Werkstoff für das Antriebsrad 101 bevorzugt unter mechanischen Gesichtspunkten ausgewählt werden kann.

Ebenso können bei erfindungsgemäßen Ausführungsformen des Rotors 100 das Antriebsrad 101, das Lager 103, die Federstegkupplung 105 und/oder die Exzenterschnecke 109 aus einem Stück bestehen. Die entsprechenden Kombinationen lassen sich beispielsweise im Zwei- bzw. Dreikomponentenspritzguss mit den oben genannten Vorteilen der Materialauswahl fertigen. Im Fall eines Antriebsrads in Form eines Zahnrads kann jedoch ein aufwändigerer Aufbau des Werkzeugs mit einem oder mehreren Formteilen und/oder Schiebern notwendig sein, um die Zähne des Zahnrades axial entformen zu können.

Vorteilhafterweise sind bei der vorstehend beschriebenen erfindungsgemäßen Federstegkupplungen 105 die Belastungen bei der in Figur 1 veranschaulichten Bewegung im Wesentlichen entkoppelt. Denn, während eine Torsionsbelastung durch den Antrieb zu einer Druck-/Zugbelastung der ringförmigen Federstege der Federstegkupplung 105 führt, führt eine Biegebelastung durch den Antrieb zu einer Torsions-/Biegebelastung der ringförmigen Federstege. Aufgrund dieser wenigstens partiellen Trennung der Belastungsarten lassen sich die beiden Eigenschaften Torsionssteifigkeit zur Übertragung der Drehung und Biegeelastizität zum kraftarmen Versatzausgleich bei erfindungsgemäßen Ausführungsformen der Federstegkupplung 105 je nach Anwendungsfall konstruktiv gut und weitgehend separat verwirklichen, und zwar vor allem durch eine geeignete Wahl der Abmessungen, beispielsweise Höhe und Breite, des Querschnitts der ringförmigen Federstege. In einer beispielhaften Ausführungsform kann der Radius der Exzenterbewegung und damit der Parallelversatz der Federstegkupplung 105 eine Größe von ungefähr 1 mm aufweisen.

Die Dichte, Größe und Anordnung der Federstege der Federstegkupplung 105 lässt sich der zu erwartenden Belastung anpassen. Bei der bevorzugten Anwendung der Federstegkupplung 105 in einer Exzenterschneckenpumpe ist im Wesentlichen mit einem konstanten parallelen Achsversatz zu rechnen, während Winkelfehler kaum eine Rolle spielen dürften. Entsprechend ist die Biegung der hohlzylinderförmigen Federstegkupplung 105 im Wesentlichen immer S-förmig, d.h. im (axial) mittleren Bereich der Federstegkupplung 105 erfolgt im Wesentlichen keine Biegung der Federstegkupplung, so dass bei Ausführungsformen auf die Federstegkupplungselemente im (axial) mittleren Bereich der Federstegkupplung 105 verzichtet werden kann. In diesem (axial) mittleren Bereich kann die Federstegkupplung 105 einen als Vollzylinder ausgestalteten Abschnitt umfassen, der einen oberen Abschnitt von Federstegkupplungselementen und einen unteren Abschnitt von Federstegkupplungselementen miteinander verbindet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

### Bezugszeichenliste

- 100: Rotor
- 101: Antriebsrad
- 101-1: Zahn
- 103: Lager
- 104a: axiale Verbindungselemente
- 105: Federstegkupplung
- 105a-c: Federstegkupplungselemente
- 106a: axiale Verbindungselemente
- 107a: axiale Verbindungselemente
- 109: Exzenterschnecke
- 111a: Mittelsteg
- 113a-1: halbringförmiger Federstegabschnitt
- 113a-2: halbringförmiger Federstegabschnitt
- 113a-3: halbringförmiger Federstegabschnitt
- 113a-4: halbringförmiger Federstegabschnitt
- A: Längsachse
- R1: Entformungsrichtung
- R2: Entformungsrichtung

## Patentansprüche

1. Federstegkupplung (105), welche eine Hohlzylinderform aufweist und eine Längsachse (A) definiert, wobei die Federstegkupplung (105) umfasst:
eine Vielzahl von Federstegkupplungselementen (105a-c), wobei jedes Federstegkupplungselement (105a-c) einen ersten ringförmigen Federsteg und einen zweiten ringförmigen Federsteg umfasst, die entlang der Längsachse (A) der Federstegkupplung (105) parallel versetzt zueinander angeordnet sind, wobei der erste ringförmige Federsteg und der zweite ringförmige Federsteg jeweils einen ersten halbringförmigen Federstegabschnitt (113a-1, 113a-3) und einen zweiten halbringförmigen Federstegabschnitt (113a-2, 113a-4) umfassen, die jeweils entlang der Längsachse (A) der Federstegkupplung (105) axial versetzt zueinander angeordnet sind, wobei der erste halbringförmige Federstegabschnitt (113a-1) des ersten ringförmigen Federstegs jeweils über ein erstes axiales Verbindungselement (104a) mit dem ersten halbringförmigen Federstegabschnitt (113a-3) des zweiten ringförmigen Federstegs des Federstegkupplungselements (105a-c) stoffschlüssig verbunden ist,
**dadurch gekennzeichnet, dass** der zweite halbringförmige Federstegabschnitt (113a-2) des ersten ringförmigen Federstegs über ein zweites axiales Verbindungselement (106a) mit dem zweiten halbringförmigen Federstegabschnitt (113a-4) des zweiten ringförmigen Federstegs des Federstegkupplungselements (105a-c) stoffschlüssig verbunden ist, wobei das zweite axiale Verbindungselement (106a) relativ zu der Längsachse (A) der Federstegkupplung (105) jeweils gegenüber dem ersten axialen Verbindungselement (104a) ausgebildet ist.

2. Federstegkupplung (105) nach Anspruch 1, **dadurch gekennzeichnet, dass** der erste ringförmige Federsteg und der zweite ringförmige Federsteg einen im Wesentlichen rechteckigen Querschnitt aufweisen.

3. Federstegkupplung (105) nach einem der vorstehenden Ansprüche, **dadurch gekennzeichnet, dass** das erste axiale Verbindungselement (104a) über einen radial verlaufenden Mittelsteg (111a) stoffschlüssig mit dem zweiten axialen Verbindungselement (106a) verbunden ist.

4. Federstegkupplung (105) nach einem der vorstehenden Ansprüche, **dadurch gekennzeichnet, dass** zwei benachbarte Federstegkupplungselemente (105a-c) über zwei dritte axiale Verbindungselemente (107a) stoffschlüssig miteinander verbunden sind, wobei die zwei dritten axialen Verbindungselemente (107a) an zwei gegenüberliegenden Stellen des Umfangs der hohlzylinderförmigen Federstegkupplung (105) ausgebildet sind.

5. Federstegkupplung (105) nach Anspruch 4, **dadurch gekennzeichnet, dass** die zwei dritten axialen Verbindungselemente (107a) an zwei Stellen des Umfangs der hohlzylinderförmigen Federstegkupplung (105) ausgebildet sind, die mit den Stellen des Umfangs der hohlzylinderförmigen Federstegkupplung (105), an denen jeweils die ersten axialen Verbindungselemente (104a) ausgebildet sind, einen rechten Winkel definieren.

6. Federstegkupplung (105) nach Anspruch 4 oder 5, **dadurch gekennzeichnet, dass** die zwei dritten axialen Verbindungselemente (107a) eine radiale Breite aufweisen, die gleich der radialen Breite des ersten und des zweiten ringförmigen Federstegs ist.

7. Federstegkupplung (105) nach einem der vorstehenden Ansprüche, **dadurch gekennzeichnet, dass** der axiale Abstand zwischen dem ersten oder zweiten halbringförmigen Federstegabschnitt (113a-1, 113a-2) des ersten ringförmigen Federstegs und dem ersten oder zweiten halbringförmigen (113a-3, 113a-4) Federstegabschnitt des zweiten ringförmigen Federstegs größer als der axiale Abstand zwischen dem ersten halbringförmigen Federstegabschnitt (113a-1, 113a-3) und dem zweiten halbringförmigen Federstegabschnitt (113a-2, 113a-4) des ersten oder zweiten ringförmigen Federstegs ist.

8. Federstegkupplung (105) nach einem der vorstehenden Ansprüche, **dadurch gekennzeichnet, dass** die Federstegkupplung (105) ein Spritzgussteil ist.

9. Rotor (100) für eine Exzenterschneckenpumpe, wobei der Rotor (100) umfasst: eine Federstegkupplung (105) nach einem der vorstehenden Ansprüche, die ein Antriebsrad (101) des Rotors (100) an eine Exzenterschnecke (109) des Rotors (100) koppelt.

10. Rotor (100) nach Anspruch 9, wobei die Federstegkupplung (105), das Antriebsrad (101) und die Exzenterschnecke (109) einstückig ausgebildet sind.

11. Rotor (100) nach Anspruch 9, wobei die Federstegkupplung (105) und das Antriebsrad (101) aus unterschiedlichen Materialien gefertigt sind und/oder die Federstegkupplung (105) und die Exzenterschnecke (109) aus unterschiedlichen Materialien gefertigt sind.

12. Exzenterschneckenpumpe mit einem Rotor (100) nach einem der Ansprüche 9 bis 11.

13. Hausgerät, insbesondere Waschmaschine, mit einer Exzenterschneckenpumpe nach Anspruch 12 zum Dosieren eines Fluids.

## Claims

1. Spring bar coupling (105), which has a hollow cylinder shape and defines a longitudinal axis (A), wherein the spring bar coupling (105) comprises:
a plurality of spring bar coupling elements (105a-c), wherein each spring bar coupling element (105a-c) comprises a first annular spring bar and a second annular spring bar, which are arranged parallel offset relative to one another along the longitudinal axis (A) of the spring bar coupling (105), wherein the first annular spring bar and the second annular spring bar each comprise a first half ring-shaped spring bar portion (113a-1, 113a-3) and a second half ring-shaped spring bar portion (113a-2, 113a-4), which are arranged axially offset relative to one another in each case along the longitudinal axis (A) of the spring bar coupling (105), wherein the first half ring-shaped spring bar portion (113a-1) of the first ring-shaped spring bar is connected with a material bond in each case via a first axial connecting element (104a) to the first half ring-shaped spring bar portion (113a-3) of the second ring-shaped spring bar of the spring bar coupling element (105a-c),
**characterised in that** the second half ring-shaped spring bar portion (113a-2) of the first ring-shaped spring bar is connected with a material bond by way of a second axial connecting element (106a) to the second half ring-shaped spring bar portion (113a-4) of the second ring-shaped spring bar of the spring bar coupling element (105a-c), wherein the second axial connecting element (106a) relative to the longitudinal axis (A) of the spring bar coupling (105) is embodied in each case opposite to the first axial connecting element (104a).

2. Spring bar coupling (105) according to claim 1, **characterised in that** the first ring-shaped spring bar and the second ring-shaped spring bar have a substantially rectangular cross-section.

3. Spring bar coupling (105) according to one of the preceding claims, **characterised in that** the first axial connecting element (104a) is connected with a material bond to the second axial connecting element (106a) by way of a radially running middle bar (111a).

4. Spring bar coupling (105) according to one of the preceding claims, **characterised in that** two adjacent spring bar coupling elements (105a-c) are connected with a material bond to one another by way of two third axial connecting elements (107a), wherein the two third axial connecting elements (107a) are embodied on two opposing points of the periphery of the hollow cylinder-shaped spring bar coupling (105).

5. Spring bar coupling (105) according to claim 4, **characterised in that** the two third axial connecting elements (107a) are embodied on two points of the periphery of the hollow cylinder-shaped spring bar coupling (105) which define a right angle with the points of the periphery of the hollow cylinder-shaped spring bar coupling (105), on which in each case the first axial connecting elements (140a) are embodied.

6. Spring bar coupling (105) according to claim 4 or 5, **characterised in that** the two third axial connecting elements (107a) have a radial width, which equates to the radial width of the first and the second ring-shaped spring bar.

7. Spring bar coupling (105) according to one of the preceding claims, **characterised in that** the axial distance between the first or second half ring-shaped spring bar portion (113a-1, 113a-2) of the first ring-shaped spring bar and the first or second half ring-shaped (113a-3, 113a-4) spring bar portion of the second ring-shaped spring bar is greater than the axial distance between the first half ring-shaped spring bar portion (113a-1, 113a-3) and the second half ring-shaped spring bar portion (113a-2, 113a-4) of the first or second ring-shaped spring bar.

8. Spring bar coupling (105) according to one of the preceding claims, **characterised in that** the spring bar coupling (105) is an injection moulded part.

9. Rotor (100) for an eccentric worm pump, wherein the rotor (100) comprises: a spring bar coupling (105) according to one of the preceding claims, which couples a drive wheel (101) of the rotor (100) to an eccentric worm (109) of the rotor (100).

10. Rotor (100) according to claim 9, wherein the spring bar coupling (105), the drive wheel (101) and the eccentric worm (109) are embodied in one piece.

11. Rotor (100) according to claim 9, wherein the spring bar coupling (105) and the drive wheel (101) are manufactured from different materials and/or the spring bar coupling (105) and the eccentric worm (109) are manufactured from different materials.

12. Eccentric worm pump with a rotor (100) according to one of claims 9 to 11.

13. Household appliance, in particular washing machine, with an eccentric worm pump according to claim 12 for dosing a fluid.

## Revendications

1. Couplage à barrettes ressort (105) qui présente une forme de cylindre creux et définit un axe longitudinal (A), dans lequel le couplage à barrettes ressort (105) comprend :
une pluralité d'éléments de couplage à barrettes ressort (105a-c), dans lequel chaque élément de couplage à barrettes ressort (105a-c) comprend une première barrette ressort annulaire et une seconde barrette ressort annulaire qui sont disposées décalées parallèlement l'une par rapport à l'autre le long de l'axe longitudinal (A) du couplage à barrettes ressort (105), dans lequel la première barrette ressort annulaire et la seconde barrette ressort annulaire comprennent respectivement une première section de barrette ressort semi-annulaire (113a-1, 113a-3) et une seconde section de barrette ressort semi-annulaire (113a-2, 113a-4) qui sont disposées décalées dans le sens axial l'une par rapport à l'autre respectivement le long de l'axe longitudinal (A) du couplage à barrettes ressort (105), dans lequel la première section de barrette ressort semi-annulaire (113a-1) de la première barrette ressort annulaire est reliée respectivement par le biais d'un premier élément de liaison axiale (104a) à la première section de barrette ressort semi-annulaire (113a-3) de la seconde barrette ressort annulaire de l'élément de couplage à barrettes ressort (105a-c) par liaison de matières,
**caractérisé en ce que** la seconde section de barrette ressort semi-annulaire (113a-2) de la première barrette ressort annulaire est reliée par le biais d'un deuxième élément de liaison axiale (106a) à la seconde section de barrette ressort semi-annulaire (113a-4) de la seconde barrette ressort annulaire du deuxième élément de couplage à barrettes ressort (105a-c) par liaison de matières, dans lequel le deuxième élément de liaison axiale (106a) est réalisé par rapport à l'axe longitudinal (A) du couplage à barrettes ressort (105) respectivement opposé au premier élément de liaison axiale (104a).

2. Couplage à barrettes ressort (105) selon la revendication 1, **caractérisé en ce que** la première barrette ressort annulaire et la seconde barrette ressort annulaire présentent une section transversale essentiellement rectangulaire.

3. Couplage à barrettes ressort (105) selon l'une des revendications précédentes, **caractérisé en ce que** le premier élément de liaison axiale (104a) est relié au deuxième élément de liaison axiale (106a) par liaison de matières par l'intermédiaire d'une barrette médiane (111a) s'étendant dans le sens radial.

4. Couplage à barrettes ressort (105) selon l'une des revendications précédentes, **caractérisé en ce que** deux éléments de couplage à barrettes ressort (105a-c) voisins sont reliés ensemble par le biais de deux troisièmes éléments de liaison axiale (107a) par liaison de matières, dans lequel les deux troisièmes éléments de liaison axiale (107a) sont réalisés au niveau de deux emplacements opposés du pourtour du couplage à barrettes ressort en forme de cylindre creux (105).

5. Couplage à barrettes ressort (105) selon la revendication 4, **caractérisé en ce que** les deux troisièmes éléments de liaison axiale (107a) sont réalisés au niveau de deux emplacements du pourtour du couplage à barrettes ressort en forme de cylindre creux (105) qui définissent un angle droit avec les emplacements du pourtour du couplage à barrettes ressort en forme de cylindre creux (105), au niveau desquels respectivement les premiers éléments de liaison axiale (104a) sont réalisés.

6. Couplage à barrettes ressort (105) selon la revendication 4 ou 5, **caractérisé en ce que** les deux troisièmes éléments de liaison axiale (107a) présentent une largeur radiale qui est égale à la largeur radiale de la première et de la seconde barrette ressort annulaire.

7. Couplage à barrettes ressort (105) selon l'une des revendications précédentes, **caractérisé en ce que** la distance axiale entre la première ou la seconde section de barrette ressort semi-annulaire (113a-1, 113a-2) de la première barrette ressort annulaire et la première ou la seconde section de barrette ressort semi-annulaire (113a-3, 113a-4) de la seconde barrette ressort annulaire est plus grande que la distance axiale entre la première section de barrette ressort semi-annulaire (113a-1, 113a-3) et la seconde section de barrette ressort semi-annulaire (113a-2, 113a-4) de la première ou de la seconde barrette ressort annulaire.

8. Couplage à barrettes ressort (105) selon l'une des revendications précédentes, **caractérisée en ce que** le couplage à barrettes ressort (105) est une pièce moulée par injection.

9. Rotor (100) pour une pompe à vis excentrée, dans lequel le rotor (100) comprend :
un couplage à barrettes ressort (105) selon l'une des revendications précédentes qui couple une roue directrice (101) du rotor (100) à une vis excentrée (109) du rotor (100).

10. Rotor (100) selon la revendication 9, dans lequel le couplage à barrettes ressort (105), la roue directrice (101) et la vis excentrée (109) sont réalisées d'un seul tenant.

11. Rotor (100) selon la revendication 9, dans lequel le couplage à barrettes ressort (105) et la roue directrice (101) sont fabriqués à partir de matériaux différents et/ou le couplage à barrettes ressort (105) et la vis excentrée (109) sont fabriqués à partir de matériaux différents.

12. Pompe à vis excentrée comportant un rotor (100) selon l'une des revendications 9 à 11.

13. Appareil électroménager, en particulier lave-linge, comportant une pompe à vis excentrée selon la revendication 12 permettant le dosage d'un fluide.
